# EUROPEAN PATENT APPLICATION

(11) **EP 4 548 822 A1**
(43) Date of publication of application: **07.05.2025**
(21) Application number: 24192110.5
(22) Date of filing: 31.07.2024
(51) Int. Cl.: A47J 37/06

(54) **UPPER MACHINE CORE DEVICE AND COOKING APPLIANCE**

(30) Priority: 30.10.2023 CN 202322917557 U
(71) Applicant: Foshan Shunde Midea Electrical Heating Appliances Manufacturing Co., Limited, Foshan, Guangdong 528311 (CN)
(72) Inventor: LI, Yong, Foshan (CN); ZHANG, Jianhua, Foshan (CN)
(74) Representative: Ran, Handong

(57) **Abstract**

Disclosed are an upper machine core device and a cooking appliance. The upper machine core device includes an upper machine core assembly, a heating assembly and a ventilation member. The upper machine core assembly is provided with an installation cavity and includes a baffle member. The installation cavity forms an opening on one side of the upper machine core assembly; the baffle member is provided in the installation cavity and covers the opening. The heating assembly is arranged in the installation cavity. The ventilation member is connected to the upper machine core assembly, and is provided with a ventilation channel. The ventilation channel runs through both sides of the ventilation member, and one end of the ventilation channel faces the side of the baffle member away from the installation cavity. When the upper machine core device covers the pot body provided with the cooking cavity, the cooking cavity and the installation cavity are isolated due to the presence of the baffle member. Therefore, the ventilation member allows the ventilation channel to be connected with the cooking cavity when the upper machine core device covers the pot body; and then when the cooking appliance is in working condition, the water vapor in the pot body can be smoothly discharged to the outside through the ventilation channel, which can adjust the water vapor content in the pot to improve the cooking taste.

## Description

### TECHNICAL FIELD

The present application relates to the technical field of cooking appliances, in particular to an upper machine core device and a cooking appliance.

### BACKGROUND

An air fryer is a cooking appliance that uses heat to fry food. Specifically, the air fryer includes a heating tube and a fan installed in the pot body. The heating tube is used to heat the air in the pot body, and the fan is used to blow hot air into the pot to heat the food, so that the hot air can be circulated in the pot body, thereby dehydrating food to achieve the effect of food frying.

However, during the use of an air fryer, how to remove water vapor from the pot is a key concern for researchers.

### SUMMARY

Embodiments of the present application provide an upper machine core device and a cooking appliance.

According to a first aspect of the present application, an embodiment of the present application provides an upper machine core device, including: an upper machine core assembly provided with an installation cavity and a baffle member; the installation cavity is configured to form an opening on one side of the upper machine core assembly, and the baffle member is provided in the installation cavity and configured to cover the opening; a heating assembly provided in the installation cavity; and a ventilation member connected to the upper machine core assembly; the ventilation member is provided with a ventilation channel, and the ventilation channel is configured to pass through both sides of the ventilation member; one end of the ventilation channel is configured to face a side of the baffle member away from the installation cavity.

In an embodiment, the upper machine core device, further including: a heat insulation assembly including a heat insulation member and a heat reflection member; the heat insulation member is provided on a side of the heating assembly away from the opening, and the heat reflection member is located on a side of the heat insulation member close to the opening; a heat insulation cavity is formed between the heat reflection member and the heat insulation member, and the heating assembly is provided on a side of the heat reflection member away from the heat insulation cavity.

In an embodiment, the upper machine core device is further provided with a first heat dissipation member, and the first heat dissipation member is formed with a first heat dissipation channel; one end of the first heat dissipation channel is connected to the heat insulation cavity, and the other end of the first heat dissipation channel is connected to the external environment.

In an embodiment, the upper machine core assembly further includes a driving member, a bracket and a shell; the heat insulation member is engaged with the shell to form a heat dissipation cavity, and the driving member and the bracket are arranged on a side of the heat insulation member away from the heating assembly; the bracket is installed in the heat dissipation cavity, and the driving member is installed in the bracket; and the upper machine core device further includes a second heat dissipation member, and the second heat dissipation member is formed with a second heat dissipation channel; one end of the second heat dissipation channel is connected to the heat dissipation cavity, and the other end of the second heat dissipation channel is connected to the external environment.

In an embodiment, at least two of the first heat dissipation member, the second heat dissipation member and the ventilation member are integrally formed.

In an embodiment, a side of the ventilation member connected to the external environment is located on a side of the upper machine core device, and a side of the first heat dissipation member and/or the second heat dissipation member connected to the external environment is located on a top surface of the upper machine core device.

In an embodiment, the upper machine core assembly further includes a transmission shaft and a circulation impeller; the circulation impeller is provided on one side of the baffle member away from the installation cavity, and the circulation impeller is drivingly connected to the driving member through the transmission shaft.

In an embodiment, an extension direction of the ventilation channel is perpendicular to a plane where the baffle member is located; and a further opening connected to the ventilation channel is formed on the upper machine core assembly; the further opening is located on a side of the upper machine core assembly provided with the baffle member, and a cross section of the further opening is located above the circulation impeller.

In an embodiment, the heat insulation member includes a heat insulation body and a heat insulation peripheral wall, and the heat insulation peripheral wall is connected to a periphery of the heat insulation body and is bent relative to the heat insulation body so as to jointly define the heat insulation cavity with the heat insulation body; and the heat reflection member includes a reflection body and a reflection peripheral wall; the reflection peripheral wall is connected to a periphery of the reflection body and is bent relative to the reflection body so as to jointly define a reflection cavity with the reflection body; the reflection body and the heat insulation body is relatively spaced apart, and the reflection peripheral wall and the heat insulation peripheral wall are relatively spaced apart.

In an embodiment, the heat reflection member is provided with a first through hole, and the heat insulation member is provided with a second through hole; the upper machine core assembly also includes a driving member, a circulation impeller and a transmission shaft; the driving member is provided on the upper machine core assembly, and the transmission shaft is configured to passe through the first through hole and the second through hole; the circulation impeller is arranged on a side of the baffle member away from the installation cavity and is drivingly connected to the driving member through the transmission shaft; and the heat insulation assembly also includes a heat insulation sleeve, and the heat insulation sleeve is sleeved on an outer periphery of the transmission shaft.

In an embodiment, the heat reflection member includes a reflection bottom wall and a reflection boss; the reflection boss is connected to the reflection bottom wall and is configured to protrude toward the opening relative to the reflection bottom wall, and the first through hole is provided on the reflection boss; the heating assembly is provided around an outer periphery of the reflection boss; and the heat insulation sleeve is located between a side of the reflection boss away from the heating element and the transmission shaft.

According to a second aspect of the present application, an embodiment of the present application further provides a cooking appliance, including: pot body; and the upper machine core device; the upper machine core device is configured to cover the pot body.

The present application provides an upper machine core device and a cooking appliance. The upper machine core device includes an upper machine core assembly, a heating assembly and a ventilation member. The upper machine core assembly is provided with an installation cavity, the baffle member covers the opening of the installation cavity, and the heating assembly is arranged in the installation cavity. Therefore, when the upper machine core device covers the pot body provided with the cooking cavity, the cooking cavity and the installation cavity are isolated due to the presence of the baffle member. In the present application, a ventilation member connected to the upper machine core assembly is provided. The ventilation member is provided with a ventilation channel, and one end of the ventilation channel faces the side of the baffle member away from the installation cavity. For example, when the upper machine core device covers the pot body, the above-mentioned ventilation channel can be connected to the cooking cavity; and when the cooking appliance is in working condition, the water vapor in the pot body can be smoothly discharged to the outside through the ventilation channel to adjust the water vapor content in the pot body and improve the cooking taste.

### BRIEF DESCRIPTION OF THE DRAWINGS

In order to more clearly illustrate the technical solutions in the embodiments of the present application, the drawings needed to be used in the description of the embodiments will be briefly introduced below. Obviously, the drawings in the following description are only some embodiments of the present application. For those skilled in the art, other drawings can also be obtained based on these drawings without exerting creative efforts.
FIG. 1 is a schematic view of the overall structure of a cooking appliance according to an embodiment of the present application.
FIG. 2 is a perspective sectional view of the cooking appliance in FIG. 1.
FIG. 3 is a schematic cross-sectional view of an upper machine core device in FIG. 1.
FIG. 4 is a schematic structural view of a heat reflection member in FIG. 3.
FIG. 5 is a schematic structural view of a heat insulation member in FIG. 3.
FIG. 6 is a partial enlarged view of the upper machine core device shown in FIG. 3.
FIG. 7 is a schematic structural view of a heat insulation sleeve in FIG. 3.
FIG. 8 is a schematic structural view of a ventilation member in FIG. 3.

Description of reference signs: 100. upper machine core device; 200. cooking appliance; 210. pot body; 2100. cooking cavity; 120. upper machine core assembly; 1200. installation cavity; 1210. baffle member; 1212. thermally conductive baffle; 1214. baffle bracket; 1220. opening; 1230. shell; 1250. partition member; 1260. heat dissipation cavity; 1270. bracket; 1280. air circulation assembly; 1281. driving member; 1283. circulation impeller; 1285. transmission shaft; 1287. heat dissipation impeller; 140. heating assembly; 1410. heating element; 160. ventilation member; 1600. ventilation channel; 36. first further opening; 38. second further opening; 170. first heat dissipation member; 1700. first heat dissipation channel; 20, first surface; 22. second surface; 30. first air inlet; 32. first air outlet; 1720. first channel portion; 1740. second channel portion; 190. second heat dissipation member; 1900. second heat dissipation channel; 34. second air outlet; 180. heat insulation assembly; 1810. heat insulation member; 1812. heat insulation cavity; 1814. heat dissipation hole; 1815. heat insulation body; 1816. heat insulation peripheral wall; 1818. second through hole; 1830. heat reflection member; 1832. reflection cavity; 1834. reflection body; 1835. reflection bottom wall; 1836. reflection boss; 1838. reflection peripheral wall; 1839. first through hole; 1850. heat insulation sleeve; 1852. sleeve portion; 1854. flange portion.

### DETAILED DESCRIPTION OF THE EMBODIMENTS

In order to enable those skilled in the art to better understand the solution of the present application, the technical solution in the embodiment of the present application will be clearly and completely described below in conjunction with the drawings in the embodiment of the present application. Obviously, the described embodiments are only some of the embodiments of the present application, but not all of the embodiments. Based on the embodiments in the present application, all other embodiments obtained by those skilled in the art without creative efforts shall fall within the scope of protection of the present application.

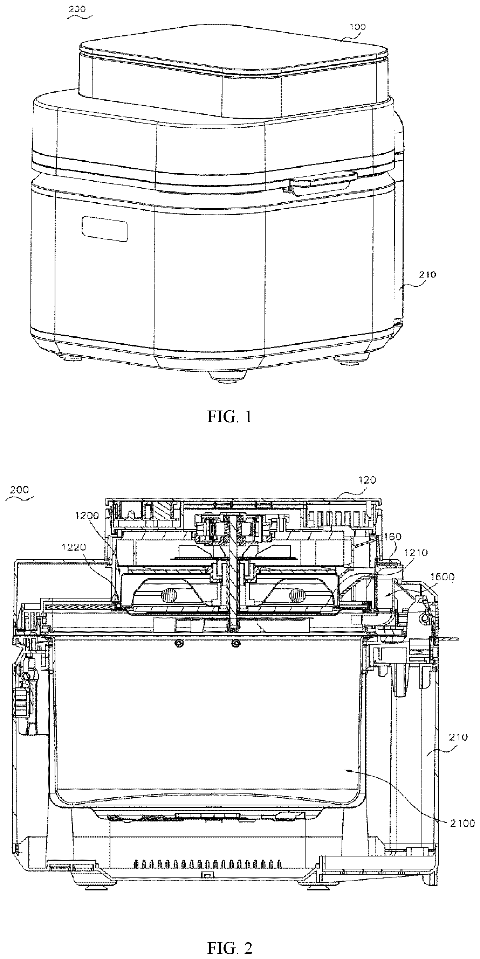

Referring to FIGS. 1 and 2, embodiments of the present application provide an upper machine core device 100 and a cooking appliance 200 equipped with the upper machine core device 100. The cooking appliance 200 is an appliance that can use heat to cook food. For example, the cooking appliance 200 may be an air fryer. In an embodiment, when the air fryer is working, the cooking appliance 200 can generate hot air through the heating tube in the pot body, and then use a fan to blow high-temperature air into the pot to heat the food, so that the hot air can circulate in the pot body, thereby dehydrating food to achieve the effect of frying.

In this embodiment, the cooking appliance 200 may include a pot body 210 and an upper machine core device 100; the pot body 210 may be provided with a cooking cavity 2100, and the cooking cavity 2100 is used to place food to be cooked. The upper machine core device 100 is used to cover the cooking cavity 2100 of the pot body 210 and to heat the food in the cooking cavity 2100. In some possible embodiments, the cooking appliance 200 is a flip-top appliance, and one side of the upper machine core device 100 is rotatably connected to the pot body 210. In other possible embodiments, the cooking appliance 200 is a pull-out appliance, and the shell structure of the upper machine core device 100 can be integrally connected or assembled with the shell structure of the pot body 210.

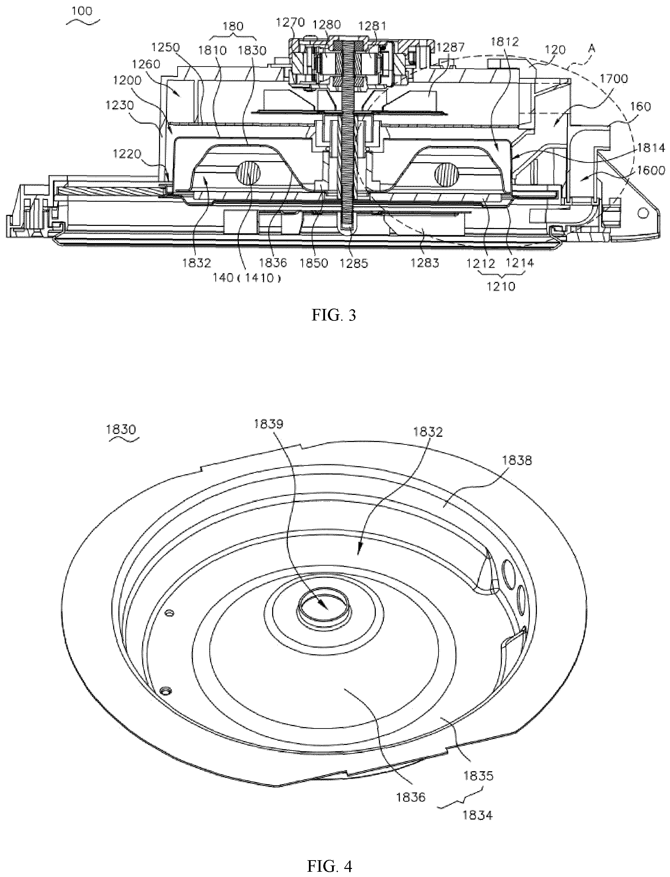

Referring to FIGS. 2 and 3, the upper machine core device 100 may include an upper machine core assembly 120, a heating assembly 140 and a ventilation member 160. The upper machine core assembly 120 may be provided with an installation cavity 1200 and may include a baffle member 1210. The installation cavity 1200 forms an opening 1220 on one side of the upper machine core assembly 120. The baffle member 1210 is provided in the installation cavity 1200 and covers the opening 1220. The heating assembly 140 is provided in the installation cavity 1200. The ventilation member 160 is connected to the upper machine core assembly 120. The ventilation member 160 may be provided with a ventilation channel 1600. The ventilation channel 1600 passes through both sides of the ventilation member 160. One end of the ventilation channel 1600 faces the side of the baffle member 1210 away from the installation cavity 1200.

When the upper machine core device 100 in this embodiment covers the pot body 210 with the cooking cavity 2100, the cooking cavity 2100 and the installation cavity 1200 are isolated due to the presence of the baffle member 1210. Therefore, in this embodiment, the ventilation member 160 connected to the upper machine core assembly 120 is provided, so that when the upper machine core assembly 100 covers the pot body 210, the ventilation channel 1600 can be connected with the cooking cavity 2100; and when the cooking appliance 200 is in the working state, the water vapor in the pot body 210 can be smoothly discharged to the outside through the ventilation channel 1600, so as to adjust the water vapor content in the pot body 210 and improve the cooking taste.

Each assembly in the upper machine core device 100 will be introduced below.

In this embodiment, the upper machine core assembly 120 is generally in the shape of a shell cover, which can fix and protect the components (eg, the heating assembly 140) provided inside the upper machine core assembly 120. Referring to FIG. 3, the upper machine core assembly 120 may include a shell 1230 and a partition member 1250. The shell 1230 is used to connect the pot body 210. In some possible embodiments, the pot body 210 may include a connection member, and the shell 1230 may be provided with a fitting member that matches the connection member. Through the matching connection between the connection member and the fitting member, the shell 1230 can be movably connected to the pot body 210 or the shell 1230 is detachably connected to the pot body 210.

In this embodiment, the shell 1230 is provided with the above-mentioned installation cavity 1200, and the installation cavity 1200 forms an opening 1220 on one side of the shell 1230. That is, the opening 1220 of the installation cavity 1200 is defined by the shell 1230. In some embodiments, the entire shell 1230 may be a one-member structure, for example, using a polymer material (eg, plastic) for stamping or hot pressing, so that the overall structure of the shell 1230 is more solid and reliable.

The partition member 1250 is generally in a sheet-like structure and is provided in the installation cavity 1200. In an embodiment, the partition member 1250 can be fixedly connected to the inner wall of the shell 1230, or can be detachably connected to the inner wall of the shell 1230. The plane of the partition member 1250 is substantially parallel to the opening 1220, so as to divide the internal cavity of the shell 1230 into an installation cavity 1200 and a heat dissipation cavity 1260.

In this embodiment, the baffle member 1210 is provided in the installation cavity 1200 and covers the opening 1220 to isolate the installation cavity 1200 from the cooking cavity 2100. In an embodiment, in FIG. 3, the baffle member 1210 may include a thermally conductive baffle 1212 for covering the opening 1220 and a baffle bracket 1214. In an embodiment, the thermally conductive baffle 1212 is generally in a sheet shape, and may be made of glass, metal, or other materials. The baffle bracket 1214 is fixed around the periphery of the thermally conductive baffle 1212 and is fixedly connected to the shell 1230. That is, the thermally conductive baffle 1212 is connected to the shell 1230 through the baffle bracket 1214, and covers the opening 1220 together with the baffle bracket 1214.

In this embodiment, the upper machine core assembly 120 may further include a bracket 1270 and an air circulation assembly 1280. The bracket 1270 may be located approximately in the center of the shell 1230 and installed on the side of the heating assembly 140 away from the opening 1220, and is used to fix and support the driving member 1281 in the air circulation assembly 1280. In an embodiment, the bracket 1270 can be detachably connected to the shell 1230, or can be integrally formed with the shell 1230.

In some possible embodiments, at least part of the structure of the bracket 1270 is installed in the heat dissipation cavity 1260, so that when the air in the heat dissipation cavity 1260 is discharged to the outside, it can also have a heat dissipation effect on the driving member 1281 to ensure the service life of the driving member 1281.

The air circulation assembly 1280 can be used to convert the heat generated by the heating assembly 140 into hot air in the cooking cavity 2100, thereby heating the food in the cooking cavity 2100. In this embodiment, the air circulation assembly 1280 may include a driving member 1281 and a circulation impeller 1283. The driving member 1281 is provided on the upper machine core assembly 120. In an embodiment, the driving member 1281 is installed on the above-mentioned bracket 1270. In an embodiment, the driving member 1281 may be a rotary driving member. For example, the rotary driving member may be a rotary motor with its own reduction gearbox, or it may be a rotary driving device such as a rotary steering gear or a rotary cylinder.

The circulation impeller 1283 is drivingly connected to the driving member 1281, and is provided on the side of the baffle member 1210 facing away from the installation cavity 1200. When the circulation impeller 1283 rotates under the drive of the driving member 1281, it can convert the heat generated by the heating assembly 140 into hot air in the cooking cavity 2100, thereby speeding up the air circulation speed in the cooking cavity 2100 and improving the cooking efficiency of the food in the cooking cavity 2100. In an embodiment, the shape of the blades in the circulation impeller 1283 may be a quadrilateral shape, a vine leaf shape, a wing shape, etc., and the number of blades may be 3, 5, 7, etc., which is not limited in this embodiment.

In this embodiment, the air circulation assembly 1280 may also include a transmission shaft 1285 and a heat dissipation impeller 1287. Among them, the transmission shaft 1285 is passed through the upper machine core assembly 120. One end of the transmission shaft 1285 is connected to the driving member 1281, and the other end is connected to the circulation impeller 1283. That is, the circulation impeller 1283 is drivingly connected to the driving member 1281 through the transmission shaft 1285.

The heat dissipation impeller 1287 is connected to the transmission shaft 1285 and is located between the heating assembly 140 and the driving member 1281. In FIG. 3, the heat dissipation impeller 1287 is provided in the heat dissipation cavity 1260. Therefore, when the driving member 1281 drives the heat dissipation impeller 1287 to rotate through the transmission shaft 1285, the heat between the heating assembly 140 and the driving member 1281 can be reduced, thereby achieving a heat dissipation effect on the driving member 1281, thereby ensuring the service life of the driving member 1281. In an embodiment, the shape of the blades in the heat dissipation impeller 1287 can be a quadrilateral shape, a vine leaf shape, a wing shape, etc., and the number of blades can be 3, 5, 7, etc.; and the shape of the heat dissipation impeller 1287 can be the same as or different from the circulation impeller 1283, which is not limited in this embodiment.

In this embodiment, the heating assembly 140 may include a heating element 1410, which is provided in the installation cavity 1200 and is used to heat the air in the installation cavity 1200. In some possible embodiments, the heating element 1410 may include a heating tube. The heating tube is a heating device made by installing an electric heating wire into a metal tube (for example, carbon steel tube, titanium tube, stainless steel tube, copper tube, etc.). In other possible embodiments, the heating element 1410 may include a carbon tube, which is a heating device using carbon fiber as a heat transfer body. In some possible embodiments, the heating element 1410 may include a heating array film circuit (not shown in the figure), and the heating array film circuit may be integrated into the thermally conductive baffle 1212. The heating array film circuit is a circuit formed by mixing superconducting ceramic material powder and organic binding solvent into a paste-like slurry, and using screen printing technology to print the slurry on the base material in the form of circuit wiring or pattern. In an embodiment, the heating array film circuit can be integrated on the side of the thermally conductive baffle 1212 facing the installation cavity 1200, or can be integrated on the side of the thermally conductive baffle 1212 away from the installation cavity 1200. This embodiment does not specifically limit this. It should be noted here that the heating array film circuit "integrated" into the thermally conductive baffle 1212 can be that the heating array film circuit covers or be attached to the surface of the thermally conductive baffle 1212; it can also be that the thermally conductive baffle 1212 is used as the base material of the heating array film circuit, and the heating array film circuit are directly printed on the surface of the thermally conductive baffle 1212.

In this embodiment, the upper machine core device 100 may further include a heat insulation assembly 180. The heat insulation assembly 180 is provided on the side of the heating assembly 140 away from the opening 1220, and is used to isolate the heat radiated by the heating assembly 140 to the side of the upper machine core assembly 120, thus reducing the overall temperature of the upper machine core assembly 120. The heat insulation assembly 180 may include a heat insulation member 1810 and a heat reflection member 1830.

In this embodiment, the heat reflection member 1830 is located on a side of the heat insulation member 1810 close to the opening 1220, and the heat reflection member 1830 can be used to reflect the heat generated by the heating element 1410. A heat insulation cavity 1812 is formed between the heat reflection member 1830 and the heat insulation member 1810, and the heating assembly 140 is provided on a side of the heat reflection member 1830 away from the heat insulation cavity 1812. In an embodiment, a reflection cavity 1832 is provided on the side of the heat reflection member 1830 facing the opening 1220. The heating element 1410 is provided in the reflection cavity 1832, and the baffle member 1210 covers the opening of the reflection cavity 1832. Therefore, the heat generated by the heating element 1410 will enter the cooking cavity 2100 through the baffle member 1210 under the reflection of the heat reflection member 1830, thereby improving the heating efficiency of the upper machine core device 100. In some possible embodiments, the inner surface of the heat reflection member 1830, that is, the surface of the reflection cavity 1832 has a low roughness, for example, the surface is a polished surface, which improves the heat reflection efficiency of the heat reflection member 1830.

Referring to FIG. 4, the heat reflection member 1830 is generally in the form of a dome-shaped structure, which may include a reflection body 1834 and a reflection peripheral wall 1838. The reflection peripheral wall 1838 is connected to the periphery of the reflection body 1834 and is bent relative to the reflection body 1834 to collectively define a reflection cavity 1832 together with the reflection body 1834. In an embodiment, the reflection body 1834 may include a reflection bottom wall 1835 and a reflection boss 1836. The reflection boss 1836 is generally a truncated cone-shaped structure, which is located roughly in the middle of the heat reflection member 1830 and faces the opening 1220 relative to the reflection bottom wall 1835. The bottom wall of the reflection boss 1836 is substantially parallel to the plane where the opening 1220 is located. The peripheral wall of the reflection boss 1836 is connected to the outer edge of the bottom wall of the boss and extends toward the side away from the opening 1220 to define the overall shape of reflection boss 1836 together with the bottom wall of the boss. The reflection boss 1836 is provided with a first through hole 1839, and the first through hole 1839 is located approximately in the middle of the bottom wall of the boss. The transmission shaft 1285 in the air circulation assembly 1280 passes through the first through hole 1839 and is connected to the circulation impeller 1283.

The reflection bottom wall 1835 is generally in a planar annular structure and is connected to the side of the reflection boss 1836 away from the opening 1220. That is, the reflection bottom wall 1835 is connected to the side of the peripheral wall of the boss away from the bottom wall of the boss. The reflection bottom wall 1835 is substantially parallel to the plane where the opening 1220 is located, and extends radially in a direction away from the reflection boss 1836. The reflection peripheral wall 1838 is connected to the side of the reflection bottom wall 1835 away from the reflection boss 1836, that is, the reflection peripheral wall 1838 and the reflection boss 1836 are spaced apart to jointly define the reflection cavity 1832. In an embodiment, the reflection bottom wall 1835, the reflection boss 1836, and the reflection peripheral wall 1838 may be an integrally formed structure, for example, formed by stamping a metal plate.

The heating element 1410 in this embodiment can be a heating tube or a carbon tube. The heating tube or carbon tube is arranged around the periphery of the reflection boss 1836 and is spaced apart from the reflection boss 1836. That is, the heating tube or carbon tube is provided between reflection boss 1836 and reflection peripheral wall 1838. Since the reflection boss 1836 is generally in the shape of a truncated cone, that is, the surface of the reflection boss 1836 is a conical surface, therefore when the heat generated by the heating tube or the carbon tube radiates to the surface of the reflection boss 1836, the reflection boss 1836 will reflect the heat outward to baffle member 1210. In this embodiment, by arranging the reflection boss 1836, the surface area of the heat reflection member 1830 can be increased, thereby improving the heat reflection efficiency of the heat reflection member 1830. In addition, the reflection bottom wall 1835 and the baffle member 1210 are substantially parallel, and the angle between the reflection peripheral wall 1838 and the reflection bottom wall 1835 may be greater than 90 degrees and less than 150 degrees. Therefore, when the heat generated by the heating tube or carbon tube radiates to the reflection peripheral wall 1838, the reflection peripheral wall 1838 will reflect the heat inwardly to the baffle member 1210 to avoid dead spots of thermal radiation.

In this embodiment, the heat insulation member 1810 is provided on the side of the heating assembly 140 away from the opening 1220. In FIG. 3, the heat insulation member 1810 is provided between the heat reflection member 1830 and the driving member 1281 for isolating the heat between the heat reflection member 1830 and the driving member 1281, thereby ensuring the service life of the driving member 1281.

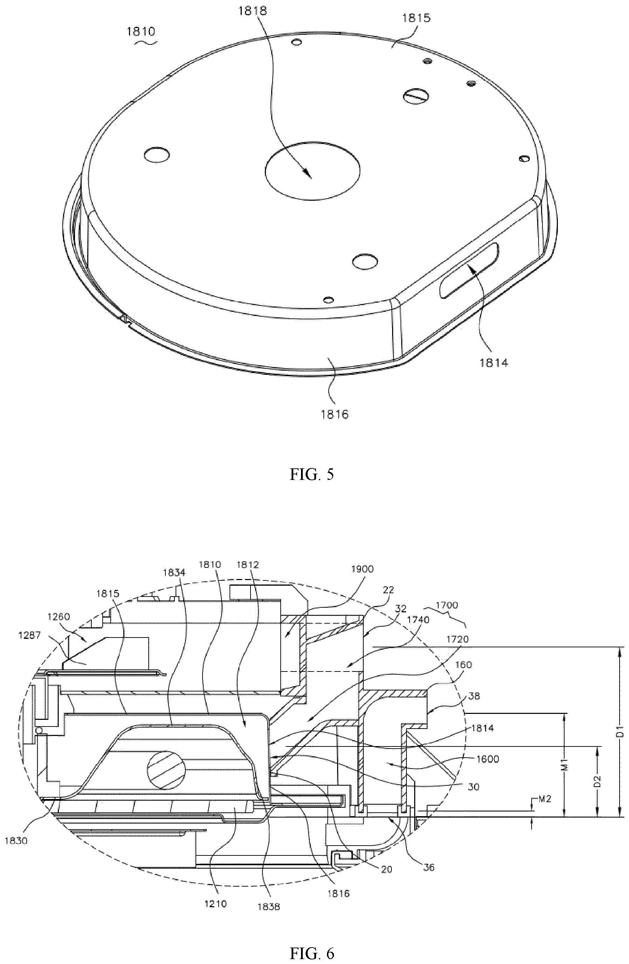

Please referring to FIGS. 5 and 6, the heat insulation member 1810 has a generally shell-like structure. A heat insulation cavity 1812 is provided on the side of the heat insulation member 1810 facing the opening 1220. The heat reflection member 1830 is provided in the heat insulation cavity 1812. The baffle member 1210 covers the opening of the heat insulation cavity 1812. Therefore, the heat generated by the heating assembly 140 will be introduced into the cooking cavity 2100 through the baffle member 1210 under the isolation of the heat insulation member 1810, thereby improving the heat utilization efficiency of the upper machine core device 100.

In some possible embodiments, the heat insulation member 1810 can be coupled with the shell 1230 to form the above-mentioned heat dissipation cavity 1260, and the driving member 1281 and the bracket 1270 are provided on the side of the heat insulation member 1810 away from the heating assembly 140.

In this embodiment, the heat insulation member 1810 and the heat reflection member 1830 are spaced apart. That is, there is a gap between the heat insulation member 1810 and the heat reflection member 1830. The air in the gap also has the effect of isolating heat, thereby improving the overall heat insulation effect of the heat insulation member 1810.

In an embodiment, the heat insulation member 1810 may include a heat insulation body 1815 and a heat insulation peripheral wall 1816. The heat insulation body 1815 has a disc-shaped structure and is substantially parallel to the plane where the opening 1220 is located. The heat insulation peripheral wall 1816 is connected to the periphery of the heat insulation body 1815 and is bent relative to the heat insulation body 1815. The heat insulation peripheral wall 1816 extends relative to the heat insulation body 1815 toward the direction of the opening 1220 to jointly define heat insulation cavity 1812 with the heat insulation body 1815. The reflection body 1834 and the heat insulation body 1815 are relatively spaced apart, and the reflection peripheral wall 1838 and the heat insulation peripheral wall 1816 are relatively spaced apart. Therefore, the upper machine core device 100 can use the air in the gap between the insulation body 1815 and the reflection body 1834 and the air in the gap between the insulation peripheral wall 1816 and the reflection peripheral wall 1838 to isolate heat, so as to improve the heat isolation effect.

In this embodiment, the heat insulation body 1815 may be provided with a second through hole 1818, and the second through hole 1818 is located approximately in the center of the heat insulation body 1815. The transmission shaft 1285 in the air circulation assembly 1280 passes through the second through hole 1818 and is connected to the circulation impeller 1283. The heat insulation body 1815 and the heat insulation peripheral wall 1816 may be an integral structure, and may be made of heat insulation materials such as ceramics, fiberglass, asbestos, rock wool, and silicate, which is not limited in this embodiment. In some possible embodiments, a heat insulation coating can be coated on the inner surface of the heat insulation member 1810, that is, the side of the heat insulation member 1810 facing the heat reflection member 1830, to improve the heat insulation effect of the heat insulation member 1810. In an embodiment, the heat insulation coating may be a coating containing rare earth elements.

In this embodiment, the heat insulation member 1810 is also provided with a heat dissipation hole 1814 connected to the heat insulation cavity 1812. The heat dissipation hole 1814 can be provided on the heat insulation body 1815 or on the heat insulation peripheral wall 1816, which is used to dissipate the heat in the heat insulation cavity 1812, thereby reducing the temperature in the heat insulation cavity 1812.

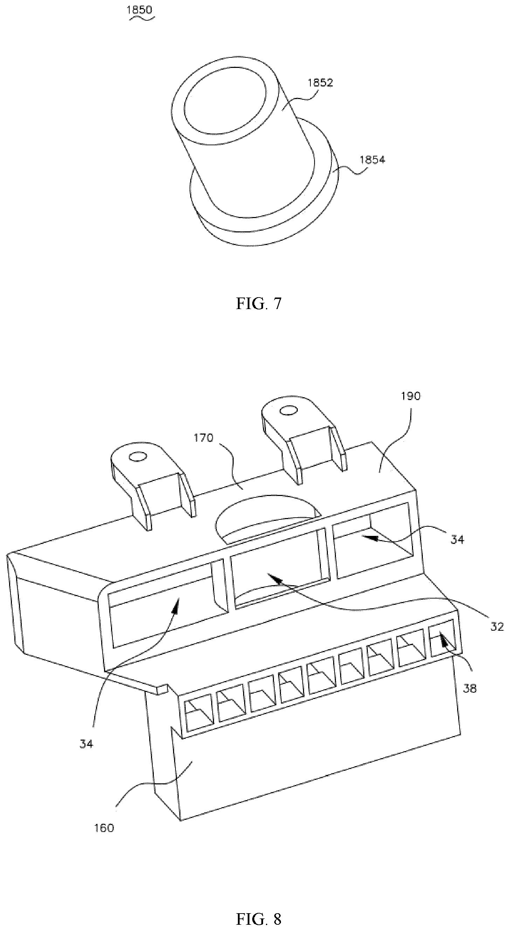

In this embodiment, the heat insulation assembly 180 may also include a heat insulation sleeve 1850. The heat insulation sleeve 1850 is sleeved on the outer periphery of the transmission shaft 1285 and is used to insulate the heat radiated from the heating assembly 140 to the transmission shaft 1285. In the embodiment shown in FIG. 3, the heat insulation sleeve 1850 is provided between the side of the reflection boss 1836 facing away from the heating element 1410 and the transmission shaft 1285. In an embodiment, please referring to FIG. 7, the heat insulation sleeve 1850 may include a sleeve portion 1852 and a flange portion 1854. The sleeve portion 1852 has a generally cylindrical structure and is open at both ends. The sleeve portion 1852 is sleeved on the outer circumference of the transmission shaft 1285, and is located between the side of the reflection boss 1836 facing away from the heating element 1410 and the transmission shaft 1285. The flange portion 1854 is located at one end of the sleeve portion 1852 and is folded outward along the radial direction of the sleeve portion 1852. Therefore, when the heat insulation sleeve 1850 is installed in the installation cavity 1200, the heat insulation sleeve 1850 can resist the bottom wall of the reflection boss 1836 through the flange portion 1854, so that the fit between the heat insulation sleeve 1850 and the heat reflection member 1830 is tighter to improve the heat insulation effect. In an embodiment, the heat insulation sleeve 1850 can be made of heat insulation materials such as ceramics, fiberglass, asbestos, rock wool, and silicate, which is not specifically limited in this embodiment.

In some possible embodiments, the heat insulation sleeve 1850 can be fixedly connected to the heat reflection member 1830. For example, the heat insulation sleeve 1850 and the heat reflection member 1830 can be an integrally formed structure, so that the heat insulation sleeve 1850 can be fixed more reliably. In some possible embodiments, the heat insulating sleeve 1850 can be fixedly connected to the heat insulation member 1810. For example, the heat insulating sleeve 1850 and the heat insulation member 1810 can be an integral structure, which is not specifically limited in this embodiment.

In this embodiment, the ventilation member 160 is generally block-shaped, and is connected to the upper machine core assembly 120. For example, the ventilation member 160 can be detachably connected to the side wall of the shell 1230. For example, the ventilation member 160 and the shell 1230 can be an integrally formed structure. The ventilation member 160 may be provided with a ventilation channel 1600 that runs through both sides of the ventilation member 160, and one end of the ventilation channel 1600 faces the side of the baffle member 1210 away from the installation cavity 1200. When the upper machine core assembly 120 covers the pot body 210, one end of the ventilation channel 1600 faces the cooking cavity 2100 to connect the cooking cavity 2100 with the external environment. Therefore, when the cooking appliance 200 is in the working state, the water vapor in the cooking cavity 2100 can be smoothly discharged to the outside through the ventilation channel 1600, so that the air pressure in the cooking cavity 2100 is consistent with the outside atmospheric pressure.

Please referring to FIG. 6 again, a first further opening 36 connected to the ventilation channel 1600 is formed on the upper machine core assembly 120. The first further opening 36 is located on the side of the upper machine core assembly 120 where the baffle member 1210 is provided. The cross section of the first further opening 36 is located above the circulation impeller 1283, which can prevent excessive water vapor in the cooking cavity 1200 from being carried away.

The ventilation member 160 is also formed with a second further opening 38 communicating with the ventilation channel 1600. The second further opening 38 is connected to the external environment. The second further opening 38 and the first further opening 36 are located on both sides of the ventilation member 160. The first further opening 36 is used to communicate with the cooking cavity 2100. The distance M1 between the second further opening 38 and the opening 1220 is greater than the distance M2 between the first further opening 36 and the opening 1220. That is, when the cooking appliance 200 is in the normal working state, the height of the second further opening 38 is greater than the height of the first further opening 36. Therefore, the water vapor in the cooking cavity 2100 can be smoothly discharged through the ventilation channel 1600, so that the air pressure in the cooking cavity 2100 remains consistent with the external atmospheric pressure. It should be noted here that when the cooking appliance 200 is placed horizontally, the opening 1220 is set along the horizontal direction. The direction of the transmission shaft 1285 is the vertical direction, and the distance M1 between the second further opening 38 and the opening 1220 refers to the distance in the vertical direction between the second further opening 38 and the plane where the opening 1220 is located; the distance M2 between the first further opening 36 and the opening 1220 refers to the distance in the vertical direction between the first further opening 36 and the plane where the opening 1220 is located.

In the embodiment shown in FIG. 6, the ventilation channel 1600 may include a vertical channel portion (not marked in the figure) and a horizontal channel portion (not marked in the figure), and the vertical channel portion and the horizontal channel portion are connected. When the cooking appliance 200 is placed horizontally, the extending direction of the vertical channel portion is substantially perpendicular to the plane where the baffle member 1210 is located, and the first further opening 36 is located in the vertical channel portion and faces the cooking cavity 2100. The extending direction of the horizontal channel portion is substantially parallel to the plane where the opening 1220 is located, and the second further opening 38 is located in the horizontal channel portion. Therefore, when the cooking appliance 200 is placed horizontally, the second further opening 38 is located on the side of the upper machine core device 100 (that is, the side of the ventilation member 160 connected to the outside is located on the side of the upper machine core device 100), which can prevent the user from getting burns caused by touching on the top of the cooking appliance 200.

In this embodiment, the upper machine core device 100 may further include a first heat dissipation member 170 connected to the heat insulation member 1810 and having a first surface 20 and a second surface 22 that are away from each other. Among them, the first surface 20 is basically attached to the outer surface of the heat insulation peripheral wall 1816 of the heat insulation member 1810, and the shape of the first surface 20 is generally adapted to the heat insulation member 1810. That is, when the first heat dissipation member 170 is connected to the heat insulation member 1810, the two can fit together almost seamlessly. In an embodiment, the first surface 20 can be a curved surface such as a plane, an arc surface, or a cylindrical surface, so that the fit between the first surface 20 and the outer surface of the heat insulation peripheral wall 1816 can be closer. The second surface 22 is located on the side of the first heat dissipation member 170 facing the outside. In an embodiment, the second surface 22 is located on the side away from the heat dissipation cavity 1260 in the upper machine core assembly 120.

The first heat dissipation member 170 is formed with a first heat dissipation channel 1700. One end of the first heat dissipation channel 1700 is connected to the heat insulation cavity 1812, and the other end is connected to the external environment. In an embodiment, the first heat dissipation channel 1700 can be connected with the heat dissipation hole 1814 on the heat insulation member 1810, so that the heat insulation cavity 1812 is connected to the external environment through the heat dissipation hole 1814. Therefore, the heat generated by the heating assembly 140 in the heat insulation cavity 1812 can be dissipated to the outside through the heat dissipation hole 1814 and the first heat dissipation channel 1700, further reducing the heat radiated by the heating assembly 140 to the side of the upper machine core assembly 120, and preventing the user from accidentally touching the upper machine core assembly 120 and causing burns.

In an embodiment, the first heat dissipation channel 1700 runs through both sides of the first heat dissipation member 170 to form the first air inlet 30 and the first air outlet 32. In an embodiment, in the illustrated embodiment, one end of the first heat dissipation channel 1700 runs through the first surface 20 to form the first air inlet 30, and the other end penetrates the second surface 22 to form the first air outlet 32. Among them, the first air inlet 30 is connected to the heat dissipation hole 1814, and the first air outlet 32 is connected to the external environment. Therefore, when the heat in the heat insulation cavity 1812 is dissipated from the heat dissipation hole 1814, it then enters the first heat dissipation channel 1700 through the first air inlet 30, and is finally dissipated to the outside through the first air inlet 30, thereby reducing the temperature inside the heat insulation cavity 1812. In this embodiment, the distance D1 between the first air outlet 32 and the opening 1220 is greater than the distance D2 between the first air inlet 30 and the opening 1220. That is, when the cooking appliance 200 is in a normal working state, the height of first air outlet 32 is greater than the height of the first air inlet 30. Therefore, the hot air formed by the heat in the heat insulation cavity 1812 can be smoothly discharged through the first heat dissipation channel 1700. It should be noted here that when the cooking appliance 200 is placed horizontally, the opening 1220 is arranged along the horizontal direction, the direction of the transmission shaft 1285 is the vertical direction; and the distance D1 between the first air outlet 32 and the opening 1220 refers to the distance in the vertical direction between the first air outlet 32 and the plane where the opening 1220 is located; the distance D2 between the first air inlet 30 and the opening 1220 refers to the distance in the vertical direction between the first air inlet 30 and the plane where the opening 1220 is located.

In the embodiment shown in FIG. 6, the first heat dissipation channel 1700 may include a first channel portion 1720 and a second channel portion 1740. The first channel portion 1720 and the second channel portion 1740 are connected. The first channel portion 1720 passes through the first heat dissipation member 170 (ie, the first surface 20 ) to form the first air inlet 30, and the second channel portion 1740 penetrates the first heat dissipation member 170 (ie, the second surface 22 ) to form the first air outlet 32. The included angle between the extension direction of the first channel portion 1720 and the plane where the opening 1220 is located is an acute angle. For example, the included angle may be greater than or equal to 30 degrees and less than 60 degrees. The extending direction of the second channel portion 1740 is substantially perpendicular to the plane where the opening 1220 is located, and the angle between the extending direction of the second channel portion 1740 and the extending direction of the first channel portion 1720 is an obtuse angle. That is, the first channel portion 1720 extends from the first air inlet 30 to a side away from the opening 1220, and the second channel portion 1740 extends from the first air outlet 32 to a side close to the opening 1220 and is connected with the first channel portion 1720, so that the heat in the heat insulation cavity 1812 can pass through the first channel portion 1720 and the second channel portion 1740 in sequence and then be dissipated to the external environment. In addition, since the second surface 22 is located on the side away from the heat dissipation cavity 1260 in the upper machine core assembly 120, when the cooking appliance 200 is placed horizontally, the first air outlet 32 is located on the side of the upper machine core assembly 100, which can avoid burns caused by the user touching the top of the cooking appliance 200. In some other possible embodiments, the side of the first heat dissipation member 170 that is connected to the external environment (that is, the first air outlet 32) may also be located on the top surface of the upper machine core device 100.

In this embodiment, the upper machine core device 100 may further include a second heat dissipation member 190, and the second heat dissipation member 190 is connected to the shell 1230. The second heat dissipation member 190 is formed with a second heat dissipation channel 1900. One end of the second heat dissipation channel 1900 is connected to the heat dissipation cavity 1260, and the other end is connected to the external environment. Therefore, when the heat dissipation impeller 1287 in the heat dissipation cavity 1260 is rotated by the driving member 1281, the generated air flow can be blown to the outside through the second heat dissipation channel 1900, thereby achieving a heat dissipation effect on the driving member 1281.

In an embodiment, the extension direction of the second heat dissipation channel 1900 is substantially parallel to the rotation plane of the heat dissipation impeller 1287 and substantially perpendicular to the extension direction of the transmission shaft 1285, and the distance between the second heat dissipation channel 1900 and the opening 1220 is approximately the same as the distance between the heat dissipation impeller 1287 and the opening 1220. That is, when the cooking appliance 200 is in normal working condition, the height of the second heat dissipation channel 1900 and the height of the heat dissipation impeller 1287 are approximately the same, so that the air flow generated by the heat dissipation impeller 1287 can be smoothly blown to the outside through the second heat dissipation channel 1900.

In this embodiment, one end of the second heat dissipation channel 1900 passes through the outer wall of the second heat dissipation member 190 to form the second air outlet 34, and the other end passes through the inner wall of the second heat dissipation member 190 to form an air inlet. The second air outlet 34 and the first air outlet 32 are arranged in parallel and spaced apart. Therefore, when the air flow generated by the heat dissipation impeller 1287 is blown out from the second air outlet 34, the high-speed air flow causes the air around the second air outlet 34 to generate "negative pressure". In this case, the air pressure at the first air outlet 32 will be less than the air pressure in the heat insulation cavity 1812, thereby speeding up the discharge speed of heat in the first heat dissipation channel 1700 and the heat insulation cavity 1812, so that the air in the heat insulation cavity 1812 can cool down quickly. In an embodiment, the number of the second air outlets 34 may be two, and the first air outlet 32 is located between the two second air outlets 34. Therefore, when the airflow generated by the heat dissipation impeller 1287 is blown out from the two second air outlets 34 respectively, the air pressure at the first air outlet 32 can be further reduced and the heat discharge speed in the heat insulation cavity 1812 can be accelerated. In some other possible embodiments, the side of the second heat dissipation member 190 that is connected to the external environment (that is, the second air outlet 34 ) may also be located on the top surface of the upper machine core device 100.

In some possible embodiments, at least two of the first heat dissipation member 170, the second heat dissipation member 190 and the ventilation member 160 are integrally formed, so that the overall structure of the upper machine core device 100 is more solid and reliable. In the embodiment shown in FIG. 8, the first heat dissipation member 170, the second heat dissipation member 190 and the ventilation member 160 are integrally formed. In some other possible embodiments, the first heat dissipation member 170 and the second heat dissipation member 190 are integrally formed; or the second heat dissipation member 190 and the ventilation member 160 are integrally formed; or the first heat dissipation member 170 and the ventilation member 160 are formed in one member. The examples do not specifically limit this.

The embodiment of the present application provides an upper machine core device 100 and a cooking appliance 200 configured with the upper machine core device 100. The upper machine core device 100 may include an upper machine core assembly 120, a heating assembly 140, and a ventilation member 160. The upper machine core assembly 120 may be provided with an installation cavity 1200 and may include a baffle member 1210. The installation cavity 1200 forms an opening 1220 on one side of the upper machine core assembly 120. The baffle member 1210 is provided in the installation cavity 1200 and covers the opening 1220. The heating assembly 140 is provided in the installation cavity 1200. The ventilation member 160 is connected to the upper machine core assembly 120. The ventilation member 160 may be provided with a ventilation channel 1600. The ventilation channel 1600 runs through both sides of the ventilation member 160. One end of the ventilation channel 1600 faces the side of the baffle member 1210 away from the installation cavity 1200.

When the upper machine core device 100 in this embodiment covers the pot body 210 with the cooking cavity 2100, the cooking cavity 2100 and the installation cavity 1200 are isolated due to the presence of the baffle member 1210. Therefore, in this embodiment, the ventilation member 160 connected to the upper machine core assembly 120 is provided, so that when the upper machine core assembly 100 covers the pot body 210, the ventilation channel 1600 can be connected with the cooking cavity 2100; and then when the cooking appliance 200 is in the working state, the water vapor in the pot body 210 can be smoothly discharged to the outside through the ventilation channel 1600, so as to adjust the water vapor content in the pot body 210 and improve the cooking taste.

In the description of the present application, certain words are used to refer to specific assembly, such as in the description and claims. Those skilled in the art will understand that hardware manufacturers may use different names to refer to the same assembly. This description and the claims do not use differences in names as a means to distinguish between assembly; rather, differences in functions between the assembly serve as a criterion for distinction. For example, "including" mentioned in the entire description and claims is an open-ended term, so it should be interpreted as "including but not limited to"; "approximately" means that those skilled in the art can solve the problem within a certain error range, and basically achieve technical results.

In the description of the present application, it should be understood that the terms "upper", "lower", "front", "back", "left", "right", "inside", etc. indicate orientation or positional relationships based on the accompanying drawings. The orientation or positional relationship shown is only to simplify the description for the convenience of describing the present application. It does not indicate or imply that the device or element referred to must have a specific orientation, be constructed and operated in a specific orientation, and therefore cannot be understood as a limitation of the present application.

In the present application, unless otherwise expressly stated or limited, the terms "installation", "connected", "connection", "fixation" and other terms should be interpreted broadly. For example, it can be a fixed connection, a detachable connection, or an integral connection; it can be a mechanical connection, or it can be an electrical connection; it can be a direct connection, or it can be an indirect connection through an intermediate medium, or it can be an internal connection between two components, or it can also be surface contact only. For those skilled in the art, the specific meanings of the above terms in the present application can be understood according to specific circumstances.

In the description of this specification, reference to the terms "one embodiment", "some embodiments", "an example", "specific examples", or "some examples" or the like means that specific features are described in connection with the embodiment or example, structures, materials or features included in at least one embodiment or example of the present application. In this specification, the schematic expressions of the above terms are not necessarily directed to the same embodiment or example. Furthermore, the specific features, structures, materials or characteristics described may be combined in any suitable manner in any one or more embodiments or examples. Furthermore, those skilled in the art may combine and combine different embodiments or examples and features of different embodiments or examples described in this specification unless they are inconsistent with each other.

In addition, the terms "first" and "second" are used for descriptive purposes only and cannot be understood as indicating or implying relative importance or implicitly indicating the quantity of indicated technical features. Therefore, features defined as "first" and "second" may explicitly or implicitly include at least one of these features. In the description of the present application, "plurality" means at least two, such as two, three, etc., unless otherwise expressly and specifically limited.

Finally, it should be noted that the above embodiments are only used to illustrate the technical solution of the present application, but not to limit it; although the present application has been described in detail with reference to the foregoing embodiments, those skilled in the art will understand that: modification can be made to the technical solutions described in the foregoing embodiments, or equivalent substitutions can be made to some of the technical features; however, these modifications or substitutions do not cause the essence of the corresponding technical solutions to deviate from the spirit and scope of the technical solutions in the embodiments of the present application.

## Claims

1. An upper machine core device (100), **characterized by**:
an upper machine core assembly (120) provided with an installation cavity (1200) and a baffle member (1210), wherein the installation cavity (1200) is configured to form an opening (1220) on one side of the upper machine core assembly (120), and the baffle member (1210) is provided in the installation cavity (1200) and configured to cover the opening (1220);
a heating assembly (140) provided in the installation cavity (1200); and
a ventilation member (160) connected to the upper machine core assembly (120), wherein the ventilation member (160) is provided with a ventilation channel (1600), the ventilation channel (1600) is configured to pass through both sides of the ventilation member (160), and one end of the ventilation channel (1600) is configured to face a side of the baffle member (1210) away from the installation cavity (1200).

2. The upper machine core device (100) according to claim 1, further comprising:
a heat insulation assembly (180) comprising a heat insulation member (1810) and a heat reflection member (1830),
wherein:
the heat insulation member (1810) is provided on a side of the heating assembly (140) away from the opening (1220);
the heat reflection member (1830) is located on a side of the heat insulation member (1810) close to the opening (1220);
a heat insulation cavity (1812) is formed between the heat reflection member (1830) and the heat insulation member (1810); and
the heating assembly (140) is provided on a side of the heat reflection member (1830) away from the heat insulation cavity (1812).

3. The upper machine core device (100) according to claim 2, wherein:
the upper machine core device (100) is further provided with a first heat dissipation member (170);
the first heat dissipation member (170) is formed with a first heat dissipation channel (1700);
one end of the first heat dissipation channel (1700) is connected to the heat insulation cavity (1812); and
the other end of the first heat dissipation channel (1700) is connected to the external environment.

4. The upper machine core device (100) according to claim 3, wherein:
the upper machine core assembly (120) further comprises a driving member (1281), a bracket (1270) and a shell (1230);
the heat insulation member (1810) is engaged with the shell (1230) to form a heat dissipation cavity (1260);
the driving member (1281) and the bracket (1270) are arranged on a side of the heat insulation member (1810) away from the heating assembly (140);
the bracket (1270) is installed in the heat dissipation cavity (1260), and the driving member (1281) is installed in the bracket (1270);
the upper machine core device (100) further comprises a second heat dissipation member (190);
the second heat dissipation member (190) is formed with a second heat dissipation channel (1900);
one end of the second heat dissipation channel (1900) is connected to the heat dissipation cavity (1260); and
the other end of the second heat dissipation channel (1900) is connected to the external environment.

5. The upper machine core device (100) according to claim 4, wherein at least two of the first heat dissipation member (170), the second heat dissipation member (1900) and the ventilation member (160) are integrally formed.

6. The upper machine core device (100) according to claim 4, wherein:
a side of the ventilation member (160) connected to the external environment is located on a side of the upper machine core device (100); and
a side of the first heat dissipation member (170) and/or the second heat dissipation member (1900) connected to the external environment is located on a top surface of the upper machine core device (100).

7. The upper machine core device (100) according to claim 4, wherein:
the upper machine core assembly (120) further comprises a transmission shaft (1285) and a circulation impeller (1283);
the circulation impeller (1283) is provided on one side of the baffle member (1210) away from the installation cavity (1200); and
the circulation impeller (1283) is drivingly connected to the driving member (1281) through the transmission shaft (1285).

8. The upper machine core device (100) according to claim 7, wherein:
an extension direction of the ventilation channel (1600) is perpendicular to a plane where the baffle member (1210) is located;
a further opening (36, 38) connected to the ventilation channel (1600) is formed on the upper machine core assembly (120);
the further opening (36, 38) is located on a side of the upper machine core assembly (120) provided with the baffle member (1210); and
a cross section of the further opening (36, 38) is located above the circulation impeller (1283).

9. The upper machine core device (100) according to claim 2, wherein:
the heat insulation member (1810) comprises a heat insulation body (1815) and a heat insulation peripheral wall (1816);
the heat insulation peripheral wall (1816) is connected to a periphery of the heat insulation body (1815) and is bent relative to the heat insulation body (1815) so as to jointly define the heat insulation cavity (1812) with the heat insulation body (1815);
the heat reflection member (1830) comprises a reflection body (1834) and a reflection peripheral wall (1838);
the reflection peripheral wall (1838) is connected to a periphery of the reflection body (1834) and is bent relative to the reflection body (1834) so as to jointly define a reflection cavity (1832) with the reflection body (1834);
the reflection body (1834) and the heat insulation body (1815) are relatively spaced apart, and
the reflection peripheral wall (1838) and the heat insulation peripheral wall (1816) are relatively spaced apart.

10. The upper machine core device (100) according to claim 9, wherein:
the heat reflection member (1830) is provided with a first through hole (1839);
the heat insulation member (1810) is provided with a second through hole (1818);
the upper machine core assembly (120) also comprises a driving member (1281), a circulation impeller (1283) and a transmission shaft (1285);
the driving member (1281) is provided on the upper machine core assembly (120);
the transmission shaft (1285) is configured to passe through the first through hole (1839) and the second through hole (1818);
the circulation impeller (1283) is arranged on a side of the baffle member (1210) away from the installation cavity (1200) and is drivingly connected to the driving member (1281) through the transmission shaft (1285);
the heat insulation assembly (180) also comprises a heat insulation sleeve (1850); and
the heat insulation sleeve (1850) is sleeved on an outer periphery of the transmission shaft (1285).

11. The upper machine core device (100) according to claim 10, wherein:
the heat reflection member (1830) comprises a reflection bottom wall (1835) and a reflection boss (1836);
the reflection boss (1836) is connected to the reflection bottom wall (1835) and is configured to protrude toward the opening (1220) relative to the reflection bottom wall (1835);
the first through hole (1839) is provided on the reflection boss (1836);
the heating assembly (140) is provided around an outer periphery of the reflection boss (1836); and
the heat insulation sleeve (1850) is located between a side of the reflection boss (1836) away from a heating element (1410) and the transmission shaft (1285).

12. A cooking appliance, comprising:
a pot body (210); and
the upper machine core device (100) according to any one of claims 1 to 11, wherein the upper machine core device (100) is configured to cover the pot body (210).
